# EUROPÄISCHE PATENTSCHRIFT

(11) **EP 2 216 129 B1**
(45) Veröffentlichungstag und Bekanntmachung des Hinweises auf die Patenterteilung: **01.06.2016**
(21) Anmeldenummer: 10152326.4
(22) Anmeldetag: 01.02.2010
(51) Int. Cl.: B23K 26/70, B23K 26/04, G02B 7/09

(54) **Laserbearbeitungskopf mit integrierter Sensoreinrichtung zur Fokuslagenüberwachung**
Laser processing head with integrated sensor device for focus position monitoring
Tête de traitement laser doté d'un dispositif de capteur intégré destiné à la surveillance de la position focale

(30) Priorität: 05.02.2009 DE 102009007769
(43) Veröffentlichungstag der Anmeldung: 11.08.2010
(73) Patentinhaber: JENOPTIK Automatisierungstechnik GmbH, 07745 Jena (DE)
(72) Erfinder: Reitemeyer, Daniel, 28211 Bremen (DE); Partes, Knut, 28857 Syke (DE); Seefeld, Thomas, 28357 Bremen (DE)
(74) Vertreter: Schaller, Renate

(56) Entgegenhaltungen:
- DE-A1-102004 020 704
- DE-A1-102007 039 878
- JP-A- 60 096 392
- JP-A- 61 137 693
- JP-A- 2002 346 783

## Beschreibung

Die Erfindung betrifft einen Laserbearbeitungskopf, wie er gattungsgemäß aus der DE 10 2004 020 704 A1 bekannt ist.

Bei Materialbearbeitungsprozessen ist die Qualität des Prozessergebnisses entscheidend von der Stabilität der Prozessparameter abhängig, weshalb Prozessparameter, die sich während des Bearbeitungsprozesses unkontrolliert verändern können, überwacht und auch nachgeregelt werden.

Bei der Lasermaterialbearbeitung ist es bekannt, die Schwankungen der Laserleistung zu überwachen, indem ein fester Anteil des Laserstrahlenbündels ausgekoppelt und auf einen strahlungsempfindlichen Sensor geleitet wird. Das Empfängersignal kann dann zur Regelung der Laserleistung verwendet werden.

Es ist auch bekannt, den Laserbearbeitungsprozess zu überwachen, indem aus dem Wechselwirkungsbereich zwischen Laserstrahlenbündel und Werkstück kommende Strahlung detektiert wird. Hierzu wird in einen Laserbearbeitungskopf, über den ein Laserstrahlenbündel auf ein Werkstück fokussiert wird, z. B. ein dichroitischer Spiegel eingefügt, der das Laserstrahlenbündel ungehindert passieren lässt, jedoch die aus dem Wechselwirkungsbereich kommende Strahlung auf einen Sensor reflektiert.
Die Charakteristik der vom Sensor detektierten Strahlung kann sich in der Intensität, der Intensitätsverteilung und der Wellenlänge in Abhängigkeit von den Zuständen im Wechselwirkungsbereich unterscheiden. Änderungen der Strahlungscharakteristik und damit die gewonnenen Empfängersignale werden durch die Schwankungen mehrerer Prozessparameter verursacht. Das können insbesondere Schwankungen in der Laserleistung, des Vorschubes, der Fokuslage, der lokal unterschiedlichen Erwärmung des Werkstückes, des Kantenversatzes, der Schutzgasführung und der Spaltbreite beim Laserschweißen sein.
Das heißt, die Empfängersignale repräsentieren nicht die Schwankungen einzelner Prozessparameter, wie z. B. der Fokuslage, sondern lassen nur Rückschlüsse auf die Qualität des Prozessergebnisses insgesamt, z. B. der Schweißnaht, des Schnittes oder der Bohrung zu.
Damit dient eine derartige Prozessüberwachung hauptsächlich zur Überwachung des Erfolges des Prozesses.

Ein Laserbearbeitungskopf mit einer integrierten Sensorvorrichtung zu einer derartigen Prozessüberwachung, insbesondere beim Laserstrahlschweißen, ist aus der DE 10 2004 020 704 A1 bekannt.

Zur Signalverwertung ist hier gesagt, dass z. B. ein Statussignal abgeleitet werden kann, das den Erfolg der Schweißung anzeigt. Auch könne man aus den Signalen der einzelnen Empfänger der Empfängeranordnung (Sensor) Temperaturprofile darstellen, die mit einem Soll-Temperaturprofil verglichen werden. Letztendlich soll es möglich sein, die Signale zur geometrischen Bewertung der Schweißstelle zu Zwecken wie Nahtverfolgung, Spaltbreitenmessung und/oder Nahtvolumenberechnung zu nutzen.

Die Signalerfassung soll entweder nur zur Dokumentation der genannten Qualitätsmerkmale dienen oder aber zur Reglung des Bearbeitungsprozesses.

Bei der vom Sensor detektierten Strahlung handelt es sich um eine in der Wechselwirkungszone zwischen Laserstrahlung und Werkstück provozierte Strahlung, weshalb die Charakteristik der detektierten Strahlung, wie bereits gesagt, durch sämtliche Schwankungen von Prozess- und Werkstückparametern beeinflusst wird.

Ein Laserbearbeitungskopf gemäß der DE 10 2004 020 704 A1 umfasst ein Gehäuse mit einer Strahleintrittsöffnung und einer Strahlaustrittsöffnung sowie eine Fokussierlinse, die ein parallel auftreffendes Laserstrahlenbündel in einen außerhalb des Gehäuses liegenden Brennpunkt (Arbeitsfokus) fokussiert.
In Richtung der Strahleintrittsöffnung ist der Fokussierlinse ein Strahlteiler vorgeordnet. Dieser lässt das Laserstrahlenbündel passieren und reflektiert Strahlung, die aus der Wechselwirkungszone des Laserstrahlenbündels mit dem Werkstück kommt.

Das Werkstück und damit die Wechselwirkungszone ist zum Laserkopf hin in Strahlungsrichtung in einem vorgegebenen Abstand zur Strahlaustrittsöffnung nachgeordnet positioniert bzw. relativ geführt, sodass der Arbeitsfokus auf dem Werkstück liegt.

Der Strahlteiler kann z. B. ein fokussierender Ringspiegel sein, mit einer ausreichend großen Öffnung für das hindurchtretende Laserstrahlenbündel, der die auftreffende Strahlung auf einen Sensor reflektiert und somit einen Teil der Wechselwirkungszone abbildet.

Als Sensor können eine oder mehrere Fotodioden mit gleicher oder unterschiedlicher spektraler Empfindlichkeit, eine Kamera oder ein- bzw. zweidimensionale CCD-Bildsensoren verwendet werden. Ferner sei es auch möglich, als Sensor einen positionsempfindlichen Detektor oder einen auf CMOS-Technik basierenden fotoempfindlichen Empfänger einzusetzen.

Der Sensor liefert Ausgangssignale an eine Auswerteeinheit, wo diese verarbeitet werden, um geeignete Statussignale für eine Qualitätssicherung zu bilden und für die Steuerung oder Reglung des Laserbearbeitungsprozesses an eine Steuer-Regeleinrichtung zu liefern.

Zusammengefasst wird eine integrierte Sensorvorrichtung eines Laserbearbeitungskopfes gemäß der DE 10 2004 020 704 A1 durch die im Laserbearbeitungskopf ohnehin vorhandene, zur Fokussierung des Laserstrahlenbündels vorgesehene Fokussierlinse, einen fokussierenden Strahlteiler, einen Sensor sowie eine Auswerteeinheit und gegebenenfalls eine Steuer- und Regeleinheit gebildet.

Die Schwankungen der Prozessparameter und deren Auswirkung auf die Qualität des Prozessergebnisses hängt im Wesentlichen von den Parametern des Lasers ab. Insbesondere bei der Verwendung von Festkörperlasern hoher Leistung und Strahlqualität, wie beispielsweise Multi-Kilowatt-Faserlasern, steigt die thermische Belastung für die optischen Komponenten des Laserbearbeitungskopfes in einer bisher nicht bekannten Weise. Obwohl die verwendeten optischen transmittierenden bzw. reflektierenden Elemente bezüglich der Wellenlänge der Bearbeitungslaserstrahlung typischerweise über einen Transmissionsgrad bzw. einen Reflexionsgrad von über 99% verfügen, reicht die restliche, absorbierte Intensität aus, um die Elemente zu erwärmen. Dies kann zur Veränderung deren Oberflächenform kommen, die sich auf deren Brennweite auswirkt.
Da das Laserstrahlenbündel nicht die gesamte Oberfläche eines optischen Elementes voll ausleuchtet und die Intensitätsverteilung über den Strahlquerschnitt nicht homogen ist, kommt es neben der eigentlichen Erwärmung zur Ausbildung eines Temperaturgradienten. Da die Brechzahl des optischen Materials temperaturabhängig ist, kommt für die transmittierenden Elemente hinzu, dass sich die Brennweite in radialer Richtung unterschiedlich verändert.
Betrachtet man nicht ein einzelnes optisches Element, sondern das gesamte optische System von der Abstrahlebene der Strahlungsquelle (ein Faserende stellt eine Sekundarstrahlungsquelle dar) bis zum gewünschten Auftreffpunkt auf bzw. im Werkstück, so kommt es durch die Veränderung der Brennweiten der einzelnen optischen Elemente, insbesondere der Kollimierlinse und der Fokussierlinse, zu einer Verschiebung der Abbildung der Strahlungsquelle. Nur im Falle, dass sich der Brennpunkt der Kollimierlinse tatsächlich in der Ebene der Strahlungsquelle oder einer hierzu konjugierten Ebene befindet, wird die Strahlungsquelle in den Brennpunkt der Fokussierlinse abgebildet.
Der Begriff Fokuslagenverschiebung ist entsprechend für ein Gesamtsystem nicht ganz korrekt, sondern müsste richtigerweise Verschiebung der Abbildungsebene heißen. Da jedoch diese Verschiebung der Abbildungsebene durch die Brennweitenveränderung der einzelnen Elemente hervorgerufen wird, spricht man auch bei einem System, bei dem die Abbildung theoretisch in den Fokus des letzten abbildenden Elementes erfolgt, von einer Fokuslagenverschiebung. Das trifft auch zu, wenn diesem letzten abbildenden Element noch ein Schutzglas nachgeordnet ist, welches die Abbildung entsprechend seiner Dicke verschiebt.

Bei Einkopplung der Laserstrahlung über eine Lichtleitfaser in den Laserbearbeitungskopf, sind im Laserbearbeitungskopf in Strahlungsrichtung eine Kollimierlinse zur Parallelisierung des Laserstrahlenbündels und eine Fokussierlinse zur Fokussierung des Laserstrahlenbündels in einen außerhalb des Laserbearbeitungskopfes liegenden Arbeitsfokus angeordnet.
Zusätzlich zu den genannten optischen Elementen befindet sich in einem typischen Laserbearbeitungskopf ein der Fokussierlinse nachgeordnetes Schutzglas.
Es sind auch Laserstrahlungsköpfe bekannt, die im Strahlengang des Laserstrahlenbündels einen Strahlteiler aufweisen, um Teile des Laserstrahlenbündels auszukoppeln oder um, wie in der DE 10 2004 020 704 A1 gezeigt, in der Wechselwirkungszone provozierte Strahlung, die in den Strahlengang des Laserstrahlenbündels seitens der Strahlaustrittsöffnung einfällt, auf einen Sensor zu leiten.

Anstelle über ein Lichtleitkabel kann das Laserstrahlenbündel z. B. auch über einen Spiegelgelenkarm in den Bearbeitungslaserkopf eingekoppelt werden. In der Regel ist eine Kollimierlinse dann bereits im Spiegelgelenkarm angeordnet, sodass das Laserstrahlenbündel bereits parallelisiert in den Laserbearbeitungskopf eintritt und im Laserbearbeitungskopf als strahlformendes optisches Element zwingend nur eine Fokussierlinse vorhanden sein muss.

Die relative Lage des Arbeitsfokus zum Werkstück ist bestimmend für die räumliche Verteilung der Strahlungsintensität in der Wirkungszone. Abhängig vom gewünschten Prozessergebnis werden das Werkstück und der Laserbearbeitungskopf deshalb so zueinander positioniert, dass der Arbeitsfokus über, auf oder auch im Werkstück liegt. Es kann z. B. beim Laserschneiden auch von Vorteil sein, den Arbeitsfokus mit der zunehmenden Bearbeitungstiefe definiert nachzuführen.

In beiden Fällen ist eine unkontrollierte Fokuslagenveränderung unerwünscht. Sie kann zur erheblichen Qualitätsminderung des Prozessergebnisses führen. Z. B. kann sich die Einschweißtiefe verändern, der Lochquerschnitt vergrößern oder die Lochtiefe verringern. Im Extremfall ist der Bearbeitungsprozess nicht mehr möglich.

Üblich ist es, das Prozessergebnis durch eine Fokuslagenkorrektur zu beeinflussen, wobei die Steuersignale hierfür aus einer Prozessüberwachung, wie z. B. in der DE 10 2004 020 704 A1, gewonnen werden. Wie ausführlich dargestellt, sind diese Steuersignale jedoch durch eine Vielzahl von Prozessparametern beeinflusst und daher weniger geeignet.

JP-A-61137693 offenbart einen separaten Messlaserstrahl, wobei ein Spiegel das Messstrahlenbundel auf die Fokussierlinse reflektiert, um es dann in einem zum Brennpunkt konjugierten Bildpunkt auf der Empfangsfläche eines Sensors abzubilden.

Anstatt eine unkontrollierte Fokuslagenveränderung zu korrigieren, gibt es Bemühungen, diese zu verringern.

Hierzu gibt es z. B. aktuelle Ansätze, anstelle von Quarzglas, was üblicherweise für Laseroptiken verwendet wird, Zinksulfid zu verwenden.
Dieses Material verfügt zum einen über einen Faktor 20 höheren Wärmeleitkoeffizienten als Quarzglas, wodurch eine homogenere Wärmeleitung innerhalb der Linse sowie eine verbesserte Wärmeabgabe aus dem Material heraus erreicht werden. Insgesamt wird eine längere thermische Zeitkonstante erreicht. Des Weiteren ist Zinksulfid ein Material, welches sich - im Gegensatz zu Quarzglas - für die Diamantenbearbeitung eignet. Dadurch ist es möglich, asphärische Oberflächen herzustellen, womit sich der Vorteil ergibt, dass eine Anordnung aus zwei Linsen zur Kollimierung und anschließenden Fokussierung durch eine einzelne Linse ersetzt werden kann und somit die Anzahl der optischen Elemente im Strahlengang minimiert wird.

Es ist die Aufgabe der Erfindung, einen Laserbearbeitungskopf mit einer integrierten Sensoreinrichtung zu finden, mit der eine unkontrollierte Fokuslagenveränderung genau erfasst werden kann, um bei Überschreitung einer vorgegebenen Toleranzgrenze diese Fokuslagenveränderung geregelt auszugleichen.

Vorteilhaft soll der Laserbearbeitungskopf zusätzlich eine aus dem Stand der Technik bekannte Sensorvorrichtung zur Prozessbeobachtung aufweisen.

Diese Aufgabe wird für einen Laserbearbeitungskopf mit integrierter Sensoreinrichtung durch die Merkmale des Anspruches 1 gelöst.
Vorteilhafte Weiterbildungen sind in den Unteransprüchen beschrieben.

Es ist erfindungswesentlich, dass das parallelisierte Laserstrahlenbündel in ein Messstrahlenbündel und ein Bearbeitungsstrahlenbündel aufgeteilt wird, und das Messstrahlenbündel in einem Winkel zum Bearbeitungsstrahlenbündel über die Fokussierlinse in einen Bildpunkt abgebildet wird, in dem ein strahlungsempfindlicher Sensor angeordnet ist.

Vorteilhaft wird zur Umlenkung des Messstrahlenbündels auf die Fokussierlinse kein Planspiegel, sondern ein fokussierender Spiegel verwendet, wodurch ein Bildpunkt nicht nur außerhalb des Bearbeitungsstrahlenbündels, sondern auch nahe der Fokussierlinse entsteht, und das Gehäuse des Laserbearbeitungskopfes in seiner Länge in Richtung des Laserstrahlenbündels nur unwesentlich vergrößert werden muss.

Vorteilhaft ist auch in den Laserbearbeitungskopf zusätzlich eine Sensorvorrichtung zur Prozessüberwachung integriert, wobei die Sensorvorrichtung zur Prozessüberwachung und die Sensoreinrichtung zur Fokuslagenüberwachung vorteilhaft einen gemeinsamen Strahlteiler nutzen.

Davon ausgehend, dass optische Elemente, die ausschließlich im Messstrahlengang angeordnet sind, nämlich wenigstens ein Umlenkspiegel, nur mit einem Bruchteil der Strahlungsenergie beaufschlagt werden, wie die optischen Elemente, die im Bearbeitungsstrahlengang stehen, hat deren thermische Belastung keinen spürbaren Einfluss auf eine Fokuslagenveränderung.
Hingegen liegen alle optischen Elemente, die durch das Bearbeitungsstrahlenbündel beaufschlagt werden, ausgenommen der Strahlteiler, auch im Messstrahlengang, weshalb das Messstrahlenbündel in gleicher Weise beeinflusst wird wie das Bearbeitungsstrahlenbündel, und die Messsignale somit die Fokuslagenverschiebung des gesamten Systems widerspiegeln. Der Strahlteiler hat entweder einen nur vernachlässigbaren Einfluss auf die Fokuslagenverschiebung, oder er hat z. B. bei einer Ausführung als Lochspiegel überhaupt keinen Einfluss, da das Bearbeitungsstrahlenbündel durch das Loch geführt wird..

Anhand der Zeichnung wird die Vorrichtung im Folgenden beispielhaft näher erläutert.
Es zeigen:

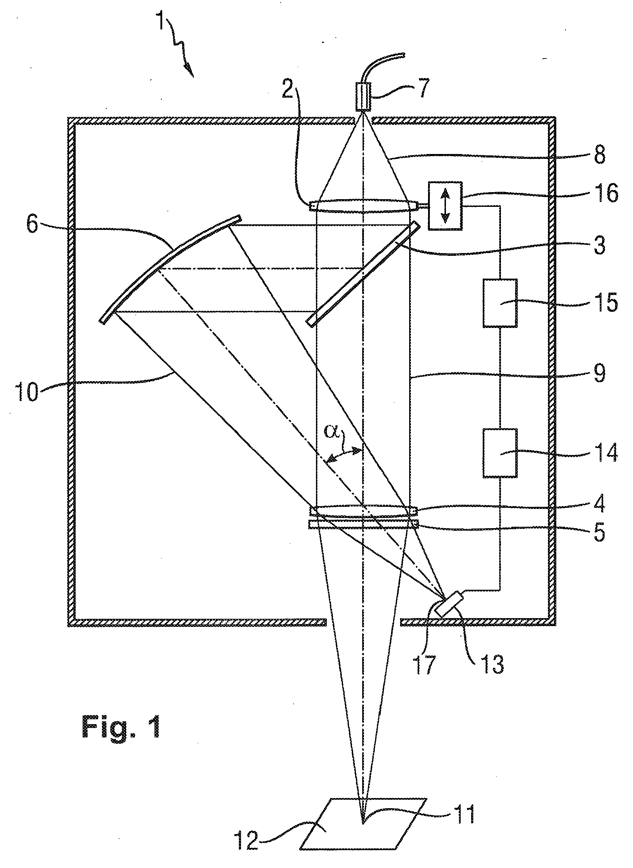

- Fig. 1: eine Prinzipskizze einer vorteilhaften Ausführung eines erfindungsgemäßen Laserbearbeitungskopfes

Die in Fig. 1 dargestellte vorteilhafte Ausführung eines Laserbearbeitungskopfes 1 weist als optische Elemente eine Kollimierlinse 2, einen Strahlteiler 3, eine Fokussierlinse 4, ein nachgeordnetes Schutzglas 5 sowie einen Spiegel 6 auf.

Über eine Strahleintrittsöffnung, an der die Austrittsfläche einer Lichtleitfaser 7 angeordnet ist, und die sich in der Brennebene der Kollimierlinse 2 befindet, wird ein Laserstrahlenbündel 8 in Richtung der optischen Achse der Kollimierlinse 2 in den Laserbearbeitungskopf 1 eingekoppelt.
Das über die Kollimierlinse 2 parallelisierte Laserstrahlenbündel 8 trifft auf den Strahlteiler 3 auf, der das Laserstrahlenbündel 8 in ein Bearbeitungsstrahlenbündel 9 und ein Messstrahlenbündel 10 teilt. Der Strahlteiler 3 kann sowohl ein geometrisch teilender als auch ein physikalisch teilender Strahlteiler 3 sein. Das Messstrahlenbündel 10 ist nur ein geringer Anteil des Laserstrahlenbündels 8, bevorzugt kleiner 5%, ausreichend, um verwertbare Messsignale zu bewirken.
Als geometrischer Strahlteiler 3 ist ein Lochspiegel oder eine teilverspiegelte Planplatte besonders geeignet. Die Teilverspieglung kann vorteilhaft eine periphere Ring- oder eine mittige Kreisfläche sein, um eine definierte Intensitätsverteilung im Messstrahlenbündel 10 zu erhalten.

Das Bearbeitungsstrahlenbündel 9 trifft anschließend auf die Fokussierlinse 4 und das nachgeordnete Schutzglas 5 auf und wird in deren resultierenden Brennpunkt 11 fokussiert, in dem ein Werkstück 12 angeordnet ist.
Bei dem beschriebenen Bearbeitungsstrahlengang handelt es sich um einen üblichen Strahlengang innerhalb eines üblichen Laserbearbeitungskopfes.
Es ist auch üblich ein Messstrahlenbündel 10 auszukoppeln.
Neu und erfindungswesentlich ist, dass das Messstrahlenbündel 10, abgesehen vom Strahlteiler 3, alle optischen Elemente durchsetzt, die auch im Bearbeitungsstrahlengang liegen, und in einem zum Brennpunkt 11 konjugierten Bildpunkt 17 abgebildet wird.
Um das zu erreichen, ist dem Strahlteiler 3 in Reflexionsrichtung der Spiegel 6 nachgeordnet. Der Spiegel 6 könnte ein Planspiegel sein. Er würde dann das Messstrahlenbündel 10 lediglich umlenken, sodass dieses ebenso wie- das Bearbeitungsstrahlenbündel 9 als paralleles Strahlenbündel, aber unter einem Winkel α auf die Fokussierlinse 4 auftrifft. Nachteilig wäre jedoch, dass das Messstrahlenbündel 10 dann ebenfalls in die resultierende Brennebene von Fokussierlinse 4 und Schutzglas 5 abgebildet werden würde, was für die Anordnung eines Sensors 13 in der Abbildungsebene problematisch wäre.
Vorteilhaft ist der Spiegel 6 daher als fokussierender Spiegel 6 ausgeführt mit einer auf die Brennweite der Fokussierlinse 4 abgestimmten Brennweite, sodass der Sensor 13 in einem Bildpunkt 17 außerhalb des Bearbeitungsstrahlenganges, möglichst nahe am Schutzglas 5 positioniert werden kann. Auch der Spiegel 6 ist möglichst nahe dem Strahlteiler 3, jedoch außerhalb des Laserstrahlenganges angeordnet, wodurch ein Gehäuse, welches die genannten optischen Elemente einschließlich dem Sensor 13 umschließt, gegenüber einem Gehäuse für einen Laserbearbeitungskopf 1 ohne integrierte Sensoreinrichtung zur Fokuslagenüberwachung nur unmerklich größer wird.

Der Sensor 13 steht mit einer Auswerteeinheit 14 in Verbindung, die die verarbeiteten Messsignale an eine Steuer- und Regeleinrichtung 15 weiterleitet, wefche mit einer Verschiebeeinrichtung 16 in Verbindung steht.

Mit der Verschiebeeinrichtung 16 wird zur Nachreglung der Fokuslagenreglung grundsätzlich die Kollimierlinse 2 entlang ihrer optischen Achse verschoben, es könnte aber auch die Fokussierlinse 4 verschoben werden. Derartige Verschiebeeinrichtungen sind aus dem Stand der Technik bekannt und sind nicht Gegenstand der Erfindung.

Als Sensor 13 sind insbesondere folgende Sensortypen geeignet: Wellenfrontsensor, positionssensitive Sensoren, CCD-Flächensensoren, CCD-Zeilensensoren.

Die auf den Sensor 13 auftreffende Strahlungsintensität verändert sich bei einer Fokuslagenverschiebung mit zunehmender Abweichung der Fokuslage in ihrem Intensitätsmaximum und ihrer Intensitätsverteilung über einen größer werdenden Zerstreu.ungskreis.
Aus der Intensitätsverteilung lässt sich daher unmittelbar auf eine Fokuslagenänderung schließen, während eine Verringerung des Intensitätsmaximums auch durch Laserleistungsschwankungen hervorgerufen sein kann. Über geeignete Auswertealgorythmen können aus den gewonnenen Messsignalen daher sowohl eine Leistungsschwankung als auch eine Fokuslagenverschiebung abgeleitet werden.
Das heißt, es können nicht nur Messwerte gewonnen werden, die als Regelgröße für eine Nachreglung der Fokuslage verwendet werden können, sondern auch solche, mit denen die Laserleistung nachgeregelt werden kann.

In einer zweiten, nicht dargestellten Ausführung, soll der Laserbearbeitungskopf 1 zusätzlich eine integrierte Sensorvorrichtung zur Prozesskontrolle umfassen, wie sie z. B. aus der DE 10 2004 020 704 A1 bekannt ist.

Der Strahlteiler 3 ist dann so ausgeführt, dass er nicht nur das Messstrahlenbündel 10 auskoppelt, sondern auch vom Werkstück 12 kommende Strahlung, die über die Fokussierlinse 4 in den Laserbearbeitungskopf 1 einfällt, auf einen zusätzlichen Sensor lenkt.

Vorteilhaft kann der Strahlteiler 3 eine beidseitig verspiegelte planparallele Platte sein, wobei dem zusätzlichen Sensor eine zweite Fokussierlinse vorgeordnet ist.
Die in Strahlungsrichtung vordere, optisch wirksame Seitenfläche nimmt, wie bereits erläutert, eine geometrische Aufteilung des Laserstrahlenbündels 8 in ein Bearbeitungsstrahlenbündel 9 und ein Messstrahlenbündel 10 vor. Dazu ist die vordere Seitenfläche mit einer Teilverspieglung versehen, die vorteilhaft die Mitte der Planplatte kreisförmig abdeckt oder den Rand kreisringförmig abdeckt. Dadurch wird ein Messstrahlenbündel 10 mit einer konzentrisch verteilten Strahlungsintensität ausgekoppelt, was für die Bildung der Messsignale vorteilhaft ist.
Die in Strahlungsrichtung hintere, optisch wirksame Seitenfläche ist vollständig mit einer dichroitischen Beschichtung abgedeckt.
Diese Beschichtung bewirkt, dass das Bearbeitungsstrahlenbündel 9 ungehindert transmittiert und die vom Werkstück 12 kommende Strahlung, die im Vergleich zum Bearbeitungsstrahlenbündel 9 eine andere Wellenlänge aufweist, reflektiert wird.

Der Strahlteiler 3 kann auch ein Lochspiegel sein, dessen hintere Seitenfläche vorteilhaft konkav geformt ist, um die reflektierte Strahlung auf den zweiten Sensor zu fokussieren. Der Strahlteiler 3 stellt dann eine beidseitig verspiegelte plankonkave Ringlinse dar. Die plane Ringfläche koppelt das Messstrahlenbündel aus dem Laserstrahlenbündel aus und die konkave Ringfläche reflektiert eine vom Werkstück (12) kommende Strahlung und leitet sie auf der Empfangsfläche eines nachgeordneten, zusätzlichen Sensor zur Prozesskontrolle. Das Laserstrahlenbündel bleibt vom Strahlteiler völlig unbeeinflusst.

### Bezugszeichenliste

- 1: Laserbearbeitungskopf
- 2: Kollimierlinse
- 3: Strahlteiler
- 4: Fokussierlinse
- 5: Schutzglas
- 6: Spiegel
- 7: Lichtleitfaser
- 8: Laserstrahlenbündel
- 9: Bearbeitungsstrahlenbündel
- 10: Messstrahlenbündel
- 11: erster resultierender Brennpunkt
- 12: Werkstück
- 13: Sensor
- 14: Auswerteeinheit
- 15: Steuer- und Regeleinrichtung
- 16: Verschiebeeinrichtung
- 17: Bildpunkt

## Patentansprüche

1. Laserbearbeitungskopf (1) mit einer integrierten Sensoreinrichtung zur Fokuslagenüberwachung, wobei der Laserbearbeitungskopf (1) eine Fokussierlinse (4) aufweist, um ein Bearbeitungsstrahlenbündel (9), das als paralleles Strahlenbündel auf die Fokussierlinse (4) auftrifft, in einen resultierenden Brennpunkt (11) der Fokussierlinse (4), in dem ein Werkstück (12) angeordnet ist, zu fokussieren, und der Fokussierlinse (4) im parallelen Strahlengang ein Strahlteiler (3) vorgeordnet ist sowie ein mit einer Auswerteeinheit (14) verbundener Sensor (13) vorhanden ist, **dadurch gekennzeichnet, dass** die Fokussierlinse ein nachgeordneten Schutzglas (5) aufweist,
dass der Strahlteiler (3) für einen ersten Anteil eines in den Laserbearbeitungskopf (1) eingekoppelten Laserstrahlenbündels (8), das Bearbeitungsstrahlenbündel (9), transmittierend und für einen zweiten Anteil, ein Messstrahlenbündel (10), reflektierend ist und
dem Strahlteiler (3) in Reflexionsrichtung ein Spiegel (6) so nachgeordnet ist, dass er das Messstrahlenbündel (10) in einem Winkel α zur optischen Achse der Fokussierlinse (4) auf die Fokussierlinse mit nachgeordneten Schutzglas reflektiert, um es in einem zum Brennpunkt (11) konjugierten Bildpunkt (17) auf der Empfangsfläche des Sensors (13) abzubilden.

2. Laserbearbeitungskopf (1) nach Anspruch 1, **dadurch gekennzeichnet,**
**dass** der Spiegel (6) ein fokussierender Spiegel ist, dessen Brennweite so auf die resultierende Brennweite (11) der Fokussierlinse (4) mit Schutzglas (5) abgestimmt ist, dass der Sensor (13) außerhalb des Bearbeitungsstrahlenbündels (9) möglichst nahe dem Schutzglas (5) angeordnet ist.

3. Laserbearbeitungskopf (1) nach Anspruch 1 oder 2, **dadurch gekennzeichnet,**
**dass** der Strahlteiler (3) ein Lochspiegel ist.

4. Laserbearbeitungskopf (1) nach Anspruch 1 oder 2, **dadurch gekennzeichnet,**
**dass** der Strahlteiler (3) eine beidseitig verspiegelte planparallele Platte ist, die einerseits eine geometrische Strahlteilung des Laserstrahlenbündels (8) in ein Messstrahlenbündel (10) und ein Bearbeitungsstrahlenbündel (9) bewirkt, und andererseits eine vom Werkstück (12) kommende Strahlung mit einer zur Bearbeitungslaserstrahlung unterschiedlichen Wellenlänge reflektiert, um sie über eine zusätzliche Fokussierlinse auf einen nachgeordneten, zusätzlichen Sensor zur Prozesskontrolle zu leiten.

5. Laserbearbeitungskopf (1) nach Anspruch 3, **dadurch gekennzeichnet,**
**dass** der Strahlteiler (3) eine beidseitig verspiegelte, plankonkave Ringlinse ist, sodass die plane Ringfläche das Messstrahlenbündel (10) aus dem Laserstrahlenbündel (8) auskoppelt und die konkave Ringfläche eine vom Werkstück (12) kommende Strahlung reflektiert, um sie auf einen nachgeordneten, zusätzlichen Sensor zur Prozesskontrolle zu leiten.

## Claims

1. Laser machining head (1) with an integrated sensor device for monitoring the focus position, wherein the laser machining head (1) has a focusing lens (4) in order to focus a machining beam (9) that strikes the focusing lens (4) as a parallel beam into a resultant focal point (11) of the focusing lens (4), in which focal point (11) a workpiece (12) is arranged, and a beam splitter (3) is arranged upstream of the focusing lens (4) in the parallel beam path, and with a sensor (13) connected to an evaluation unit (14) is present, **characterized in that**
the focusing lens (4) has a downstream protective glass (5),
the beam splitter (3) is transmissive for a first portion of a laser beam (8) coupled into the laser machining head (1), the machining beam (9), and is reflective for a second portion, a measuring beam (10), and
a mirror (6) is arranged downstream of the beam splitter (3) in the direction of reflection, in such a manner that it reflects the measuring beam (10) at an angle α to the optical axis of the focusing lens (4) onto the focusing lens (4) with downstream protective glass (5) in order to image it onto the receiving surface of the sensor (13) in an image point (17) conjugate with the focal point (11).

2. Laser machining head (1) according to claim 1, **characterized in that**
the mirror (6) is a focusing mirror, the focal length of which is matched to the resultant focal length (11) of the focusing lens (4) with protective glass (5) in such a manner that the sensor (13) is arranged outside of the machining beam (9) as close as possible to the protective glass (5).

3. Laser machining head (1) according to claim 1 or 2, **characterized in that**
the beam splitter (3) is an aperture mirror.

4. Laser machining head (1) according to claim 1 or 2, **characterized in that**
the beam splitter (3) is a plane-parallel plate mirror-coated on both sides, which on the one hand effects a geometric beam splitting of the laser beam (8) into a measuring beam (10) and a machining beam (9), and on the other hand reflects a radiation coming from the workpiece (12) with a wavelength different from the machining laser radiation, in order to direct it via an additional focusing lens onto a downstream additional sensor for process monitoring.

5. Laser machining head (1) according to claim 3, **characterized in that**
the beam splitter (3) is a planoconcave annular lens mirror-coated on both sides, so that the planar annular surface couples the measuring beam (10) out of the laser beam (8) and the concave annular surface reflects a radiation coming from the workpiece (12) in order to direct it onto a downstream additional sensor for process monitoring.

## Revendications

1. Tête d'usinage laser (1) doté d'un dispositif de capteur intégré destiné à la surveillance de la position focale, la tête d'usinage laser (1) ayant une lentille de focalisation (4) pour focaliser un faisceau d'usinage (9), qui frappe la lentille de focalisation (4) comme faisceau parallèle, dans un foyer résultant (11) de la lentille de focalisation (4), une pièce (12) étant disposée dans le foyer (11), et un diviseur de faisceau (3) étant disposé en amont de la lentille de focalisation (4) dans le trajet de faisceau parallèle, et un capteur (13) relié à une unité d'évaluation (14) étant présent, **caractérisée en ce que**
la lentille de focalisation (4) a un verre de protection (5) disposé en aval de la lentille de focalisation (4),
le diviseur de faisceau (3) est transmettant pour une première portion d'un faisceau laser (8) couplé dans la tête de d'usinage laser (1), le faisceau d'usinage (9), et réfléchissant pour une deuxième portion, un faisceau de mesure (10), et
un miroir (6) est disposé en aval du diviseur de faisceau (3) dans la direction de réflexion, de telle manière qu'il réfléchit le faisceau de mesure (10) à un angle α par rapport à l'axe optique de la lentille de focalisation (4) sur la lentille de focalisation (4) avec le verre de protection (5) disposé en aval de la lentille de focalisation (4), pour imager le faisceau de mesure (10) sur la surface de réception du capteur (13) dans un point d'image (17) conjugué par rapport au foyer (11).

2. Tête d'usinage laser (1) selon la revendication 1, **caractérisée en ce que**
le miroir (6) est un miroir de focalisation, dont la distance focale est adaptée à la distance focale résultante (11) de la lentille de focalisation (4) avec le verre de protection (5), de telle manière que le capteur (13) est disposé à l'extérieur du faisceau d'usinage (9) le plus proche possible du verre de protection (5).

3. Tête d'usinage laser (1) selon la revendication 1 ou 2, **caractérisée en ce que**
le diviseur de faisceau (3) est un miroir perforé.

4. Tête d'usinage laser (1) selon la revendication 1 ou 2, **caractérisée en ce que**
le diviseur de faisceau (3) est une plaque plane et parallèle recouverte de miroir des deux côtés, qui, d'une part, provoque une division de faisceau géométrique du faisceau laser (8) en un faisceau de mesure (10) et un faisceau d'usinage (9), et, de l'autre part, réfléchit un rayonnement émis par la pièce (12) avec une longueur d'onde différente du rayonnement laser d'usinage, pour le diriger via une lentille de focalisation supplémentaire sur un capteur supplémentaire en aval pour le contrôle du processus.

5. Tête d'usinage laser (1) selon la revendication 3, **caractérisée en ce que**
le diviseur de faisceau (3) est une lentille annulaire plan-concave recouverte de miroir des deux côtés, de façon que la surface annulaire plane découple le faisceau de mesure (10) du faisceau laser (8) et la surface annulaire concave réfléchit un rayonnement émis par la pièce (12), pour le diriger sur un capteur supplémentaire en aval pour le contrôle du processus.
